(19) Europäisches Patentamt
European Patent Office
Office européen des brevets

(11) **EP 2 983 034 A1**

(12) **EUROPEAN PATENT APPLICATION**
published in accordance with Art. 153(4) EPC

(43) Date of publication:
**10.02.2016 Bulletin 2016/06**

(51) Int Cl.:
***G02B 27/26*** (2006.01)

(21) Application number: **13840132.8**

(86) International application number:
**PCT/CN2013/077944**

(22) Date of filing: **26.06.2013**

(87) International publication number:
**WO 2014/153878 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.03.2013   CN 201310097833**

(71) Applicants:
• **BOE Technology Group Co., Ltd.**
**Beijing 100015 (CN)**

• **Beijing BOE Display Technology Co., Ltd.**
**Beijing 100176 (CN)**

(72) Inventor: **WANG, Junwei**
**Beijing 100176 (CN)**

(74) Representative: **Brötz, Helmut et al**
**Rieder & Partner**
**Patentanwälte - Rechtsanwalt**
**Corneliusstrasse 45**
**42329 Wuppertal (DE)**

(54) **DISPLAY PANEL AND 3D DISPLAY DEVICE**

(57)     A display panel and a 3D display device are disclosed. The display panel comprises a substrate (213, 513, 613, 713), pixel units (212, 512, 612, 712) provided at one side of the substrate (213, 513, 613, 713), a black matrix (211, 511, 611, 711) provided between any adjacent two pixel units (212, 512, 612, 712), and a phase retardation film provided at the other side of the substrate (213, 513, 613, 713), the phase retardation film comprises phase delaying units (214, 514, 614, 714); one side of the substrate (213, 513, 613, 713) provided with the phase retardation film is further provided with a refracting layer (215), which is used to refract the light emitted from the pixel unit (212, 512, 612, 712) toward the display panel. The display panel shortens the distance of the crosstalk-free area thereto, thereby improving the 3D watching distance and also broadening the viewing angles.

FIG. 2

EP 2 983 034 A1

**Description**

TECHNICAL FIELD

Embodiments of the present invention relates to a display panel and a 3D (three-dimensional) display device.

BACKGROUND

The mainstream technologies for 3D display in the current market are polarization 3D and active shutter 3D technologies. The operation principle for polarization 3D display is realized by adhering a layer of FPR film or GPR configuration, the light emitting out from the odd rows of pixel units and the even rows of pixel units is transformed into left-handed and right-handed polarization light respectively, and then by the light modulation treatment of the glasses comprising polarization sheets, a human's left eye and right eye are enabled to watch different images, thus 3D effect is achieved. Due to the restriction for its operation principle, it's generally required for the viewer to watch at a certain given distance such that the viewer can observe better 3D effect.

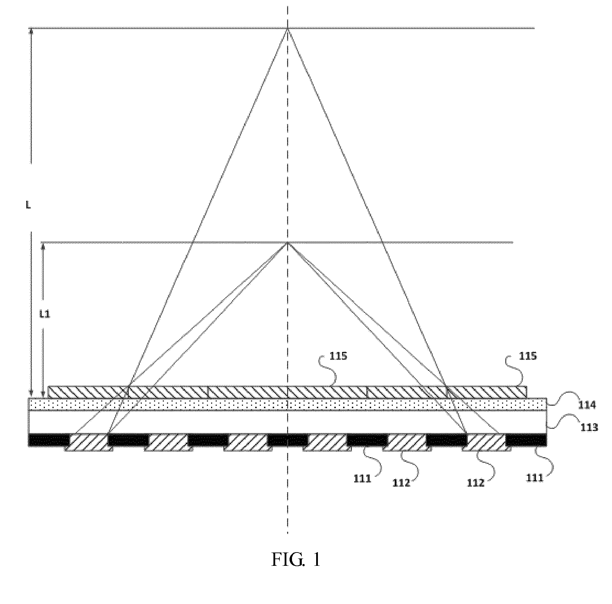

As illustrated in Fig.1, assuming the projection of the eyes of the viewer onto the display panel is at the centre of the display panel, where the viewer is at a short distance to the display panel ("L1" in Fig.1), it's possible for the left eye of the viewer to not only watch the light from the left eye-corresponding pixel units (hereafter referred to as left eye pixels) 112, but also watch the light from the right eye-corresponding pixel units (hereafter referred to as right eye pixels) 112, this is because the FPR 115 corresponding to a left eye pixel may also have light from the right eye pixel adjacent to this left eye pixel pass therethrough. The FRP 115 corresponding to the left eye pixel is in display of a left eye image and a right eye image simultaneously, and also the FRP 115 corresponding to a right eye pixel is in display of the right eye image and the left eye image simultaneously, the result is that the viewer feels confusion. As illustrated in Fig.1, only where the distance of the viewer to the display panel is at least L, the crosstalk can be eliminated. In Fig.1, the reference numerical 111 means a black matrix, the reference numerical 113 denotes a substrate, and the reference numerical 114 refers to a polarization sheet.

SUMMARY

Embodiments of the present invention provide a display panel and a 3D display device to improve the 3D watching distance.

The present invention provides a display panel comprising a substrate, pixel units provided at one side of the substrate, a black matrix provided between any adjacent two pixel units, and a phase retardation film provided at the other side of the substrate; the phase retardation film comprises a plurality of phase retardation units; and the side of the substrate provided with the phase retardation film is further provided with a refracting layer for refracting light emitted from the pixel units in directions toward a midline in a horizontal direction of the display panel.

In an embodiment, the refracting layer is a concave lens; the surface of the concave lens at the side adjacent to the substrate is a flat face and the surface thereof at the side away from the substrate is a curved face, the extending direction of the curved face is perpendicular to the length direction of the phase retardation unit.

In an embodiment, the surface of the refracting layer at the side adjacent to the substrate is a flat face, and the surface thereof at the side away from the substrate is a flat face in the central area but is a curved face in the peripheral area at both sides of the midline in the horizontal direction of the display panel, and the thickness of the peripheral area is increased gradually from the midline in the horizontal direction toward both sides of the display panel.

In an embodiment, the refracting layer comprises at least two prism units provided symmetrically with respect to the midline in the horizontal direction of the display panel as the symmetric axis; the surface at the side of the at least two prism units adjacent to the substrate are flat faces and the surface at the side thereof away from the substrate is an inclined face, the lower side of the inclined face is close to the centre of the display panel, and the upper side of the inclined face is close to the edge of the display panel.

In an embodiment, the projection of each of the prism units onto the phase retardation film covers at least one of phase retardation units.

In an embodiment, the sections of the prism units along the plane perpendicular to the length direction of the phase retardation units are of a trapezoid.

In an embodiment, the refracting layer further comprises a flat unit corresponding to the central area of the display panel and comprising the at least two prism units provided at its both sides; the flat unit has a uniform thickness and flat upper and lower surfaces, and the thickness of the flat unit is equal or less than the minimum thickness of the prism unit.

In an embodiment, the relevant parameters for the refracting layer satisfy the following formulas:

$$\tan\theta_1 = \frac{W/2}{L} = \frac{b/2}{T};$$

$$\tan(\theta_4 + \alpha) = \frac{W/2}{L};$$

$$n_{21} = \mathrm{Sin}\theta 4 / \mathrm{Sin}\theta 3;$$

$$n_{32}=Sin\theta 2/Sin\theta 1;$$

$$\theta_3=\theta_2-\alpha;$$

wherein $\theta_1$ refers to the angle between the light exit from the pixel unit and the normal line of the surface at the side of the refracting layer adjacent to the substrate before the light comes into the refracting layer, $\theta_2$ refers to the angle of the light with the normal line of the surface at the side of the refracting layer adjacent to the substrate after the light has entered the refracting layer, $\theta_3$ refers to the angle of the light with the normal line of the surface of the refracting layer at the side away from the substrate before the light comes out of the refracting layer, $\theta_4$ refers to the angle of the light with the normal line of the surface of the refracting layer at the side away from the substrate after the light has come out of the refracting layer, W refers to the length of the display panel in the vertical direction, L refers to the minimum distance of the crosstalk-free area to the display panel when the refracting layer is not provided, b refers to the width of a black matrix, t refers to the distance between the pixel unit and the refracting layer, $\alpha$ refers to the angle of the surface of the refracting layer at the side away from the substrate, or the tangent plane at the peak point in the surface of the refracting layer at the side away from the substrate, with the horizontal plane, L' refers to the minimum distance of the crosstalk-free area to the display panel after the refracting layer is provided, $n_{21}$ refers to index of the refracting layer with respect to air, and $n_{32}$ refers to index of the phase retardation film with respect to the refracting layer.

In an embodiment, the material for the refracting layer is glass or resin.

Another aspect of the present invention further provides a 3D display device comprising the display panel.

BRIEF DESCRIPTION OF THE DRAWINGS

In order to illustrate the technical solution of the embodiment of the present invention more clearly, a simply introduction about the drawings of the embodiments will be made in the following, and obviously, the drawings described later relate to only some embodiments of the present invention, rather than limitation to the present invention.

Fig.1 is a schematic view illustrating the principle where crosstalk effect occurs in the existing liquid crystal panel and 3D television;
Fig.2 is a schematic view showing principle how the display panel of the present invention improves the 3D watching distance;
Fig.3a shows a partial light path of the display panel according to the present invention;
Fig.3b shows a schematic view of the principle to calculate the angle $\alpha$;
Fig.4 is a schematic view showing the principle how the display panel broadens viewing angles according to the present invention;
Figs 5a to 5c are structural schematic views of the display panel according to a second embodiment of the present invention;
Fig.6 is a structural schematic view of the display panel according to a third embodiment of the present invention; and
Fig.7 is a structural schematic view of the display panel according to a fourth embodiment of the present invention.

DETAILED DESCRIPTION

To make clearer the object, technical solutions and advantages of the embodiments of the present invention, a clear and full description of the technical solution of the embodiment of the present invention will be made with reference to the accompanying drawings of the embodiment of the present invention. Obviously, the described embodiments are merely part of the embodiments of the present invention, but not all the embodiments. Based on the described embodiments of the present invention, all the other embodiments acquired by the ordinary skilled in this art, without any creative labor, fall into the protective scope of the present invention.

Unless defined otherwise, the technical or scientific terms used herein should take the meaning usually understood by the ordinary skilled in this art of the present invention. Phrases "first", "second" and the like used in the description and claims of the present application do not mean any sequence, quantity or importance, but are only used to distinguish different components. Also "a", "an" or "the" and similar words does not mean quantitative restriction, but refers to the existence of at least one. Phases "comprise", "include" and the like intend to mean that the elements or articles before this word encompass the elements or articles listed after this word without excluding other elements or articles. Phases "connected", "coupled" or the like is not limited to physical or mechanical connections, but may comprise electrical connection, no matter directly or indirectly. Further, phrases "on", "under", "left", "right" and the like are used only for describing a relative positional relationship, which will be varied correspondingly when the described objects are changed in its absolute position.

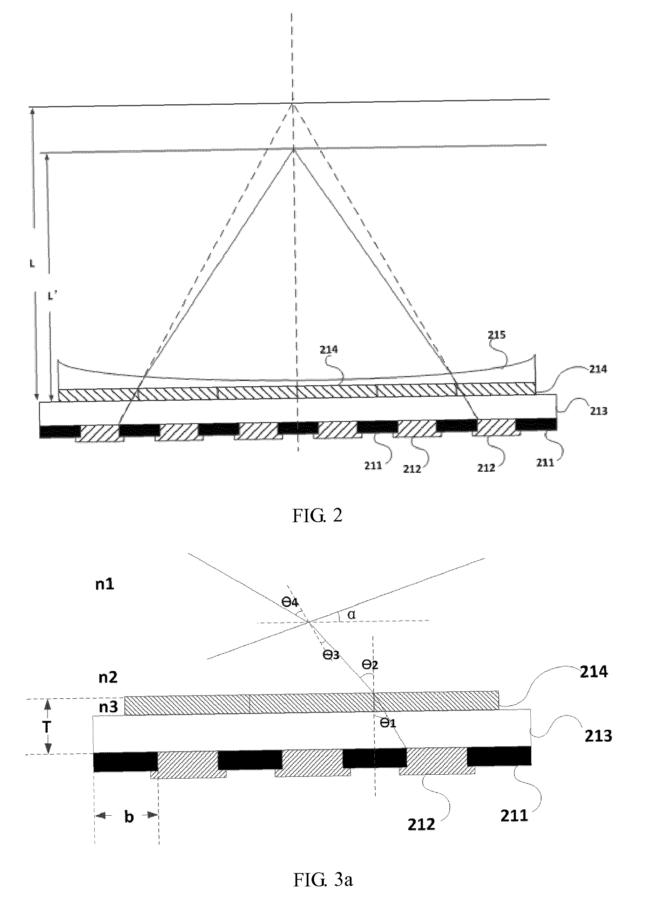

Fig.2 is a schematic view showing the principle how the display panel according to one embodiment of the present invention improves 3D watching distance. As illustrated in Fig.2, the display panel of this embodiment comprises a substrate 213, pixel units 212 provided at one side of the substrate 213, a black matrix 211 provided between any adjacent two pixel units 212, and a phase retardation film provided at the other side of the substrate 213, and the phase retardation film comprises several phase retardation unit 214. Furthermore, when the display panel is a liquid crystal panel, a polarization sheet (not illustrated in the drawing) may further be provided between the substrate 213 and the phase retardation film.

The display panel of this embodiment differs from, for example, the conventional display panel illustrated in Fig.1 lies in that one side of the substrate 213 provided with the phase retardation film is further provided with a refracting layer 215, and the refracting layer 215 is used to refract the light emitted from the pixel units 212 in the directions toward the midline in the horizontal direction of the display panel.

The substrate 213 may be a glass substrate, the phase retardation unit 214 may be an FPR (Film Patterned Retarder) or a GPR (Glass Patterned Retarder). Where a GPR is employed for the phase retardation unit 214, the GPR may be directly designed and processed into such a refracting layer that the light emitted from the pixel units is refracted in the directions toward the midline in the horizontal direction of the display panel, that is, the GPR is designed according to the shape of the refracting layer, thus it's not necessary to adhere an extra refracting layer and thus the costs can be reduced. The material for the refracting layer 215 may be glass, resin or the like.

As can be seen in Fig.2, where the eyes of the viewer are at the centre of the display panel, with the refracting layer and due to refraction for the light, it's possible to shorten the minimum distance of the interference-free area to the display panel from the original distance L to L', that is, as long as the distance from the viewer's eyes to the display panel exceeds L', no crosstalk will be sensed, thereby improving the 3D watching distance.

In Fig.2, the black matrix 211 and the pixel units 212 are arranged at the same plane, but both may also be arranged at different planes.

Detailed description will be made below about the display panels according to the embodiments of the present invention with reference to the drawings.

Embodiment 1

As illustrated in Fig.2, the refracting layer of this embodiment employs a concave lens 215. The surface at the side of the concave lens 215 adjacent to the substrate 213 is a flat face and the surface at the side thereof away from the substrate 213 is a curved face, the extending direction of the curved face is perpendicular to the length direction of the phase retardation unit 214. With the provision of the concave lens 215, the light from the pixel units 212 toward the view's eyes (given that the projection of the viewer's eyes is located at the centre of the display panel) will be refracted in the directions toward the midline in the horizontal direction of the display panel, thereby a crosstalk-free 3D watching effect can be enjoyed by the viewer at a place nearer to the display panel.
Fig.3a shows a partial light path of the display panel according to the present invention. Referring to Fig.3a, relevant parameters for the concave lens 215 satisfy the following formulas:

$$\tan\theta_1 = \frac{W/2}{L} = \frac{b/2}{T}; (1)$$

$$\tan(\theta_4+\alpha) = \frac{W/2}{L'}; (2)$$

$$n_{21} = \mathrm{Sin}\theta4/\mathrm{Sin}\theta3; \quad (3)$$

$$n_{32} = \mathrm{Sin}\theta2/\mathrm{Sin}\theta1; \quad (4)$$

$$\theta_3 = \theta_2 - \alpha; \quad (5)$$

where $\theta_1$ refers to the angle between the light exiting from the pixel unit 212 and the normal line of the surface at the side of the refracting layer 215 adjacent to the substrate 213 before the light comes into the refracting layer 215, $\theta_2$ refers to the angle of the light with the normal line of the surface at the side of the refracting layer 215 adjacent to the substrate 213 after the light has entered the refracting layer 215, $\theta_3$ refers to the angle of the light with the normal line of the surface at the side of the refracting layer 215 away from the substrate 213 before the light comes out of the refracting layer 215, $\theta_4$ refers to the angle of the light with the normal line of the surface at the side of the refracting layer 215 away from the substrate 213 after the light has emitted out of the refracting layer 215, W refers to the length of the display panel in the vertical direction, L refers to the minimum distance of the crosstalk-free area to the display panel where the refracting layer 215 is not provided, b refers to the width of a black matrix 211, T refers to the distance between the pixel unit 212 and the refracting layer 215, $\alpha$ refers to the angle of the surface of the refracting layer at the side away from the substrate or the tangent plane at the peak point in the surface of the refracting layer at the side away from the substrate, with the horizontal plane, L' refers to the minimum distance of the crosstalk-free area to the display panel after the refracting layer is provided, $n_{21}$ refers to index of the refracting layer 215 with respect to air, and $n_{32}$ refers to index of the phase retardation film with respect to the refracting layer 215.
According to above formulas, when the material for the concave lens 215 is determined (i.e., the refractive index of the concave lens 215 is given), and the angle $\alpha$ between the tangent plane at the peak point in the surface of the concave lens 215 at the side away from the substrate 213 and the horizontal plane, it' possible to obtain by derivation the minimum distance L' of the crosstalk-free area to the display panel after providing the concave lens 215 and thus obtain a shortened watching distance $\Delta L = L - L'$, which parameter can show the effect of improving the 3Dwatching distance.

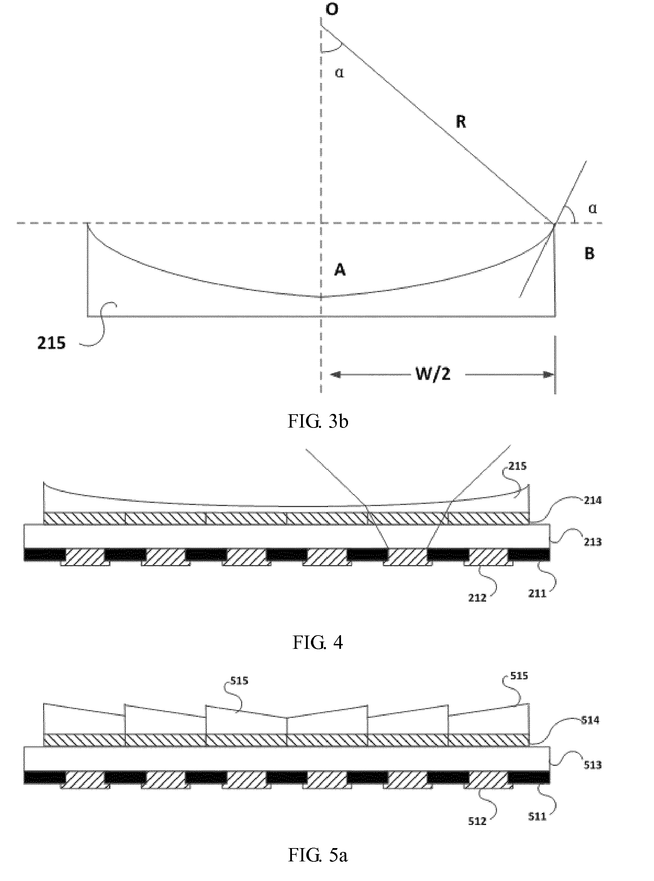

Fig.3b is a schematic view showing the calculation of the angle $\alpha$; as illustrated in Fig.3b, where the surface of the concave lens 215 at the side away from the substrate 213 is an arc surface, the angle $\alpha$ and the radius R of the arc surface satisfy the following formula:

$$\sin \alpha = \frac{W}{2R} \quad (6)$$

where W refers to the length of the display panel in the vertical direction.

In addition, where the surface of the concave lens 215 at the side away from the substrate 213 is a non-arc curved surface, it's only required to replace R in formula (6) with the curvature radius at the peak point in the surface of the concave lens 215 at the side away from the substrate 213. It should be noted, in the mean time, that the concave lens 215 is in a mirror symmetry structure with respect to the midline in the horizontal direction of the display panel as a symmetrical axis, and the surface of the concave lens 215 at the side away from the substrate 213 is a smooth surface.

Fig.4 illustrates that, by providing the concave lens 215 in such a way that the inner part of the light, emitted from the pixel units 212 in the outer area in directions toward the midline in the horizontal direction of the display panel, is deflected inwardly, while the outer part of the light, emitted from the pixel units 212 in the outer area in directions away from the midline in the horizontal direction of the display panel, is deflected in directions far away from the midline in the horizontal direction of the display panel, the viewing angles of the display panel can also be increased.

Embodiment 2

Figs 5a to 5c are structural schematic views of the display panel according to the second embodiment of the present invention. The display panel of this embodiment is substantially the same as that of the above embodiment, except that in the display panel according to this embodiment, the refracting layer comprises at least two prism units 515 symmetrically provided with respect to the midline in the horizontal direction of the display panel as the symmetrical axis.

The at least two prism units 515 are in an integral configuration, and the surfaces of the at least two prism units 515 at the side adjacent to the substrate 513 contact the phase retardation units 514, while the surfaces thereof at the side away from the substrate 513 are inclined faces, the lower side of the inclined face is adjacent to the centre of the display panel and the upper side of the inclined face is adjacent to the edge of the display panel.

Similar to the above embodiment, the other side of the substrate 513 is further provided with pixel units 512 and a black matrix 511.

Referring to Fig.5a, a display panel is illustrated comprising 6 prism units 515 symmetrically arranged with respect to the midline in the horizontal direction of the display panel as the symmetrical axis; each of the prism units 515 has its projection on the phase retardation film cover one phase retardation unit 514. In this figure, the section of the prism unit 515 along the plane perpendicular to the length direction of the phase retardation units 514 is a trapezoid, the surface of the prism unit 515 at the side adjacent to the substrate 513 contacts horizontally with the phase retardation unit 514 , and the surface thereof at the side away from the substrate 513 is an inclined face, the lower side of the inclined face is adjacent to the centre of the display panel, and the upper side of the inclined face is adjacent to the edge of the display panel.

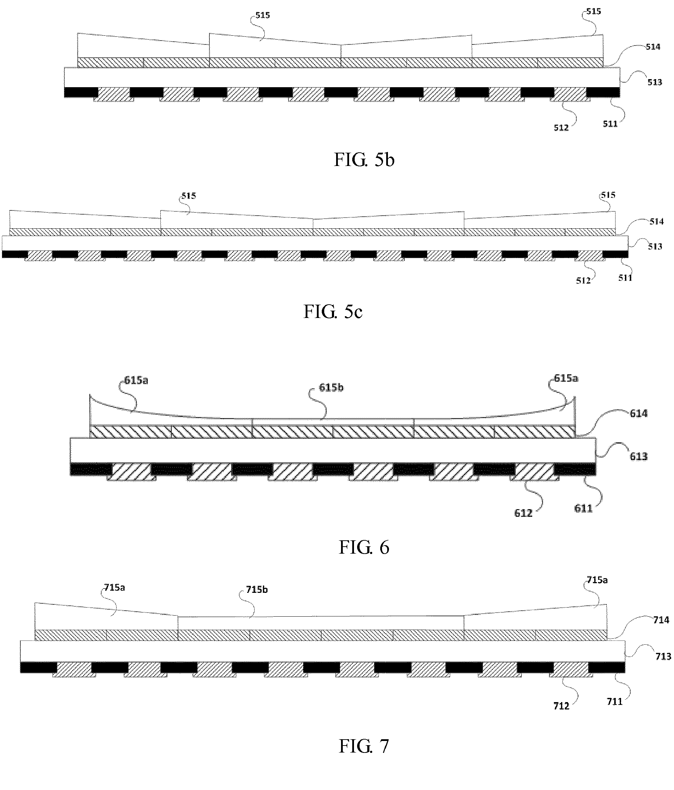

Referring to Fig.5b, the display panel illustrated in this figure comprises 4 prism units 515 arranged symmetrically with respect to the midline in the horizontal direction of the display panel as the symmetrical axis; the projection of each of the prism units 515 onto the phase retardation film covers two phase retardation units 514. In this figure, the section of the prism unit 515 along the plane perpendicular to the length direction of the phase retardation units 514 is a trapezoid, the surface of the prism unit 515 adjacent to the substrate 513 contacts horizontally with the phase retardation unit 514, and the surface thereof away from the substrate 513 is an inclined face, the lower side of the inclined face is adjacent to the centre of the display panel, and the upper side of the inclined face is adjacent to the edge of the display panel.

Referring to Fig.5c, the display panel illustrated in this figure comprises 4 prism units 515 arranged symmetrically with respect to the midline in the horizontal direction of the display panel as the symmetrical axis; the projection of each of the prism units 515 onto the phase retardation film covers three phase retardation units 514. In this figure, the section of the prism unit 515 along the plane perpendicular to the length direction of the phase retardation units 514 is a trapezoid, the surface of the prism unit 515 adjacent to the substrate 513 contacts horizontally with the phase retardation unit 514, and the surface thereof away from the substrate 513 is an inclined face, the lower side of the inclined face is adjacent to the centre of the display panel, and the upper side of the inclined face is adjacent to the edge of the display panel.

In addition, the corresponding relationship between the prism unit 515 and the phase retardation unit 514 may also be other cases besides the aforesaid three ones, for example, the projection of each prism unit 515 onto the phase retardation film covers more than three phase retardation units 514.

The partial light path of the display panel in this embodiment is similar to that in Fig.3, and the relevant parameters thereof also satisfy the above formulas (1) to (6) respectively, except that, in this embodiment, the parameter $\alpha$ in the formulas (1) to (6) refers to an angle between the surface of the prism unit 515 at the side away from the substrate 513 with the horizontal plane.

Embodiment 3

Fig.6 is a structural schematic view of the display panel according to the third embodiment of the present invention. The display panel of this embodiment is substantially the same as that in the first embodiment, except that, in this embodiment, the surface of the refracting layer at the side adjacent to the substrate 613 is a flat face and contacts with the phase retardation unit(s) 614, while the surface thereof at the side away from the substrate 613 is a flat face in its central area but become a curved face in its periphery areas on the both sides of the midline in the horizontal direction of the display panel, and the central area is lower than the periphery areas, and the periphery areas are increased gradually from the midline in the horizontal direction toward both sides of the display panel in thickness.

That is to say, the refracting layer of this embodiment comprises a platform body 615b as well as curve-faced units 615a arranged symmetrically at both sides of the platform body 615b. The thickness of the platform body 615b is uniform, and the thickness of the curve-faced units 615a is increased gradually from the midline in the horizontal direction toward both sides of the display panel. The platform body 615b and the curve-faced unit 615a may be of an integral structure or an independent structure.

Additionally, another side of the substrate 613 is further provided with pixel unit 612 and black matrix 611, and the detailed description thereof is omitted.

The partial light path of the display panel in this embodiment is similar to that in Fig.3, and the principle for calculating its relevant parameters is similar to that in embodiment 1, and therefore its detailed description is omitted.

Embodiment 4

Fig.7 is a structural schematic view of the display panel according to the fourth embodiment of the present invention. The display panel of this embodiment is substantially the same as that in the second embodiment, except that, in this embodiment, the refracting layer further comprises a flat unit 715b in addition to the prism unit 715a.

The prism unit 715a may be the same as the prism unit in the second embodiment in shape. The flat unit 715b is arranged at the centre of the display panel with respect to the midline in the horizontal direction of the display panel as a symmetrical axis, and either side of the flat unit 715b is provided with one prism unit 715a; the thickness of the flat unit 715b is uniform, and the surface thereof at the side adjacent to the substrate 713 and the surface thereof at the side away from the substrate 713 both are flat faces, and the thickness of the flat unit 715b is equal or less than the minimal thickness of the prism units 715a. The lower side of the prism unit 715a is adjacent to the centre of the display panel, and the upper side thereof is adjacent to the edge of the display panel. Further, there also may be two or more prism units 715a provided at both sides of the flat unit 715b, and the flat unit 715b and the prism units 715a provided at both sides thereof may be of an integral structure or an independent structure.

Furthermore, a phase retardation film is arranged between the refracting layer and the substrate 713, which comprises a plurality of phase retardation units 714. Another side of the substrate 713 is further provided with pixel units 712 and a black matrix 711, and its detailed description is omitted.

The partial light path of the display panel in this embodiment is similar to that in Fig.3, and the principle for calculating its relevant parameters is similar to that in embodiment 2, and therefore its detailed description is omitted.

The 3D display device of the embodiment of the present invention may be a liquid crystal display, a liquid crystal television, an OLED display, an OLED television, a plasma display, a plasma television, a panel computer, a cell phone, an electronic paper and so on.

In the display panel and 3D display device of the embodiment of the present invention, the refracting layer is designed in such a way that the light emitted from the pixel unit is refracted in directions toward the midline in the horizontal direction of the display panel, thus the minimum distance from the crosstalk-free area to the display panel is shortened and thereby an improved 3D watching distance is obtained. Also, by providing the refracting layer, the viewing angles of the display panel is also broadened.

The above described are solely exemplary embodiments of the present invention, rather than limitation on the protective scope of the present invention which is defined by the attached claims.

**Claims**

1. A display panel comprising a substrate, pixel units provided at one side of the substrate, a black matrix provided between any adjacent two pixel units, and a phase retardation film provided at the other side of the substrate;

   wherein the phase retardation film comprises a plurality of phase retardation units, and the side of the substrate provided with the phase retardation film is further provided with a refracting layer for refracting light emitted from the pixel units in directions toward a midline in a horizontal direction of the display panel.

2. The display panel according to claim 1, wherein the refracting layer is a concave lens; a surface of the concave lens at a side adjacent to the substrate is a flat face and a surface thereof at a side away from the substrate is a curved face, and an extending direction of the curved face is perpendicular to a length direction of the phase retardation units.

3. The display panel according to claim 1 or 2, wherein a surface of the refracting layer at a side adjacent to the substrate is a flat face, and a surface thereof at a side away from the substrate is a flat face in a central area but is a curved face in a peripheral area at both sides of a midline in a horizontal direction of the display panel, and a thickness of the peripheral area is increased gradually from the midline in the horizontal direction toward both sides of the display panel.

4. The display panel according to claim 1, wherein the refracting layer comprises at least two prism units provided symmetrically with respect to the midline in the horizontal direction of the display panel as the symmetric axis;
a surface of the at least two prism units at a side adjacent to the substrate is a plane and a surface thereof at a side away from the substrate is an inclined face, a lower side of the inclined face is adjacent to a centre of the display panel, and an upper side of the inclined face is adjacent to an edge of the display panel.

5. The display panel according to claim 4, wherein a projection of each of the prism units onto the phase retardation film covers at least one of phase retardation units.

6. The display panel according to claim 4 or 5, wherein sections of the prism units along a plane perpendicular to a length direction of the phase retardation units are of a trapezoid.

7. The display panel according to claim 4, wherein the refracting layer further comprises a flat unit corresponding to a central area of the display panel and comprising the at least two prism units provided at its both sides,
the flat unit has a uniform thickness and flat upper and lower surfaces, and the thickness of the flat unit is equal or less than the minimum thickness of the prism units.

8. The display panel according to claim 1, wherein the relevant parameters for the refracting layer satisfy the following formulas:

$$\tan\theta_1 = \frac{W/2}{L} = \frac{b/2}{T};$$

$$\tan(\theta_4 + \alpha) = \frac{W/2}{L'};$$

$$n_{21} = \text{Sin}\theta4/\text{Sin}\theta3;$$

$$n_{32} = \text{Sin}\theta2/\text{Sin}\theta1;$$

$$\theta_3 = \theta_2 - \alpha;$$

wherein $\theta1$ refers to an angle between light exiting from one pixel unit and a normal line of a surface of the refracting layer at a side adjacent to the substrate before the light comes into the refracting layer, $\theta2$ refers to an angle of the light with a normal line of the surface of the refracting layer at the side adjacent to the substrate after the light has entered the refracting layer, $\theta3$ refers to an angle of the light with a normal line of a surface of the refracting layer at a side away from the substrate before the light emits out of the refracting layer, $\theta4$ refers to an angle of the light with a normal line of the surface of the refracting layer at the side away from the substrate after the light has come out of the refracting layer, W refers to a length of the display panel in a vertical direction, L refers to the minimum distance of a crosstalk-free area to the display panel where the refracting layer is not provided, b refers to a width of a black matrix, T refers to a distance between the pixel unit and the refracting layer, $\alpha$ refers to an angle of the surface of the refracting layer at the side away from the substrate or the tangent plane at a peak point in the surface of the refracting layer at the side away from the substrate, with a horizontal plane, L' refers to the minimum distance of the crosstalk-free area to the display panel after the refracting layer is provided, $n_{21}$ refers to an index of the refracting layer with respect to air, and $n_{32}$ refers to an index of the phase retardation film with respect to the refracting layer.

9. The display panel according to claim 1, wherein a material for the refracting layer is glass or resin.

10. A 3D display device comprising the display panel according to any one of claims 1 to 9.

FIG. 1

FIG. 2

FIG. 3a

FIG. 3b

FIG. 4

FIG. 5a

FIG. 5b

FIG. 5c

FIG. 6

FIG. 7

# INTERNATIONAL SEARCH REPORT

| | International application No. |
|---|---|
| | **PCT/CN2013/077944** |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G02B 27, G02F 1

Documentation searched other than minimum documentation to the extent that such documents are included in the fields searched

Electronic data base consulted during the international search (name of data base and, where practicable, search terms used)

CNKI, CNTXT, TWTXT, CNABS, CPRSABS, TWABS, HKABS, VEN: 3D, FPR, GPR, trapezoid, black matrix, distance, crosstalk, interference, polarization, polarity, deflection, short, near, three w dimen+, solid+, stereo+, pels+, pixel+, matrix+, phas+, dela+, refract+, FPR, GPR, lens+, prism+, concav+

**C. DOCUMENTS CONSIDERED TO BE RELEVANT**

| Category* | Citation of document, with indication, where appropriate, of the relevant passages | Relevant to claim No. |
|---|---|---|
| P, X | CN 103149732 A (BOE TECHNOLOGY GROUP CO., LTD. et al.), 12 June 2013 (12.06.2013), claims 1-10 | 1-10 |
| E | CN 203117608 U (BOE TECHNOLOGY GROUP CO., LTD. et al.), 07 August 2013 (07.08.2013), claims 1-10 | 1-10 |
| X | CN 202486466 U (NANJING CEC PANDA LCD TECHNOLOGY CO., LTD.), 10 October 2012 (10.10.2012), paragraphs 0002-0019, and figures 1-3 | 1-4, 6-10 |
| X | KR 20120059961 A (LG DISPLAY CO., LTD.), 11 June 2012 (11.06.2012), paragraphs 0028-0046, and figures 2-3 | 1-4, 6-10 |
| A | CN 101107866 A (SEEREAL TECHNOLOGIES GMBH), 16 January 2008 (16.01.2008), the whole document | 1-10 |
| A | US 2011/0188106 A1 (SAMSUNG ELECTRONICS CO., LTD.), 04 August 2011 (04.08.2011), the whole document | 1-10 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 December 2013 (19.12.2013) | **02 January 2014 (02.01.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **SUN, Sujin** Telephone No.: (86-10) **62085584** |

Form PCT/ISA/210 (second sheet) (July 2009)

## INTERNATIONAL SEARCH REPORT
### Information on patent family members

| | International application No. |
|---|---|
| | **PCT/CN2013/077944** |

| Patent Documents referred in the Report | Publication Date | Patent Family | Publication Date |
|---|---|---|---|
| CN 103149732 A | 12.06.2013 | None | |
| CN 203117608 U | 07.08.2013 | None | |
| CN 202486466 U | 10.10.2012 | None | |
| KR 20120059961 A | 11.06.2012 | None | |
| CN 101107866 A | 16.01.2008 | KR 20070104631 A | 26.10.2007 |
| | | JP 2008-529045 A | 31.07.2008 |
| | | US 8259165 B2 | 04.09.2012 |
| | | DE 102005004303 B4 | 06.09.2007 |
| | | CN 101107866 B | |
| | 19.05.2010 | | |
| | | DE 102005004303 A1 | 03.08.2006 |
| | | WO 2006/076913 A1 | 27.07.2006 |
| | | US 2009/0315983 A1 | 24.12.2009 |
| US 2011/0188106 A1 | 04.08.2011 | KR 20110090682 A | 10.08.2011 |

Form PCT/ISA/210 (patent family annex) (July 2009)

## INTERNATIONAL SEARCH REPORT

International application No.

**PCT/CN2013/077944**

**A. CLASSIFICATION OF SUBJECT MATTER**

G02F 1/1335 (2006.01) i

G02B 27/26 (2006.01) i

Form PCT/ISA/210 (extra sheet) (July 2009)